# EUROPÄISCHE PATENTANMELDUNG

(11) **EP 1 333 364 A2**
(43) Veröffentlichungstag der Anmeldung: **06.08.2003**
(21) Anmeldenummer: 03090009.6
(22) Anmeldetag: 11.01.2003
(51) Int. Cl.: G06F 3/023, G06F 3/033

(54) **Tastatur zur Zeicheneingabe bei elektronischen Geräten bestehend aus einem Sensorstreifen und ein Verfahren zur Benutzung eines Sensorstreifens zur Zeicheneingabe**

(30) Priorität: 14.01.2002 DE 10201192
(71) Anmelder: Völckers, Oliver, 54294 Trier (DE)
(72) Erfinder: Völckers, Oliver, 54294 Trier (DE)
(74) Vertreter: Burghardt, Dieter, Dipl.-Ing.

(57) **Zusammenfassung**

Die Aufgabe der Erfindung, eine Tastatur zur Zeicheneingabe, die aus einem fingerbedienbaren Sensorstreifen besteht, und ein Verfahren zur Benutzung eines Sensorstreifens zur Zeicheneingabe zu entwickeln, wurde erfindungsgemäß dadurch gelöst, daß als komplette Tastatur bei elektronischen Geräten ein berührungsempfindlicher Sensorstreifen in Verbindung mit einem Display und für die Position der Berührung des Sensorstreifens eine grafische Bestätigung auf dem Display vorgesehen ist, wobei der Sensorstreifen entweder aus einem sogenannter FSR (Force Sensing Resistor) in Form eines Linearpotentiometers, aus einem kapazitiven Sensor oder aus einer Vielzahl von räumlich in Reihe und elektrisch als Matrix in für Tastaturen üblichen Abtastungen angeordneten Folienschaltern besteht.

Die Erfindung wird genutzt als Tastatur für datenverarbeitende elektronische Geräte.

## Beschreibung

Die Erfindung betrifft eine Tastatur bestehend aus einem Sensorstreifen zur Zeicheneingabe für datenverarbeitende elektronische Geräte und ein Verfahren, um einen Sensorstreifen als Tastatur zur Zeicheneingabe benutzen zu können.

Die bekannten Tastaturen, mit denen eine Zeicheneingabe bei datenverarbeitenden elektronischen Geräten möglich ist, haben eine bestimmte Baugröße und lassen sich deshalb für datenverarbeitende elektronische Geräte mit einer kleinen Baugröße wie z.B. für Digitalkameras, Armbanduhren und Fernbedienungen für elektronische Geräte nicht einsetzen.

Mobile elektronische Geräte werden zunehmend mit einer leistungsfähigen Softwaresteuerung und grafischen Displays ausgestattet.

Eine Texteingabe-Möglichkeit ist dabei oft nützlich, wenn auch nicht zwingend erforderlich. Bei einem digitalen Diktiergerät oder einer digitalen Fotokamera etwa ist es von Vorteil, Aufnahmen mit Titeln versehen zu können. Bei einer Armbanduhr mit eingebauter Datenbank werden die meisten Einträge zwar in der Regel von einem PC übertragen, aber eine mobile Tastatur ist äußerst nützlich zur Ergänzung und Korrektur von Datensätzen.

Für solche Anwendungen sind die von PCs bekannten Tastaturen zu groß und schwer, deshalb existieren eine Reihe von improvisierten Texteingabe-Funktionen:

Als einfachste Lösung läßt sich eine Steuerung mit zwei Tasten realisieren, die in der Regel beginnend mit dem Anfang des Alphabets ein Vor- und Zurückblättern eines Cursors auf dem Zeichenvorrat erlauben. Um vom "A" bis zum "Z" zu blättern, muß die Vorwärts-Taste 25x betätigt werden; um das "C" zu erreichen, nur 2x. Eine zusätzliche Taste akzeptiert die Auswahl. Im Durchschnitt sind mit dieser Technik rund 10 Tastenbetätigungen nötig, um ein einziges Zeichen des Alphabets einzugeben.

Drehschalter mit digitalen Impulsgebern (JogDial) setzen eine Drehbewegung des Schalters in eine schnelle Abfolge von Impulsen um, die den Cursor ähnlich vor- oder zurück bewegen wie bei der zwei-Tasten-Steuerung.

Berührempfindliche Bildschirme (Touchscreens) ermöglichen eine Auswahl von Zeichen durch ein Tippen direkt auf dem Display. Mittels Sprach-Erkennung können Computer bestimmte gesprochene Wörter erkennen. Mit dieser Technologie sind seit Jahrzehnten große Hoffnungen verbunden.

Die Texteingabe mit Vor/Zurück-Tasten ist zwar preiswert und robust, aber auch sehr umständlich und langsam. Die Bedienung des JogDials ist zwar weniger umständlich, aber immer noch langsam, da angesichts der großen Zahl von Impulsen bei einer Drehbewegung eine gezielte Ansteuerung bestimmter Positionen unmöglich ist. Von daher sind diese Eingabemethoden verbreitet, werden jedoch nur als Notlösung akzeptiert.

Touchscreens dagegen sind teuer und bei kleinen Bildschirmen (Digitalkamera, Armbanduhr) unzweckmäßig. Die Sprach-Erkennung ist insbesondere angesichts der Umgebungsgeräusche beim mobilen Einsatz nicht zuverlässig genug.

Eine ultrakompakte Tastatur muß insbesondere zwei Anforderungen erfüllen: Sie muß sehr klein und leicht sein und sie muß eine zügige Zeicheneingabe ermöglichen. Außerdem sollte ihre Arbeitsweise auf Anhieb verständlich sein und sie sollte robust und verschleißfrei funktionieren. Schließlich sollte sie für Hersteller leicht in Geräte zu Integrieren und preiswert zu bauen sein.

Es sind zur Positionsbestimmung fingerbedienbare Sensorstreifen bekannt. Der Vorteil, daß die Positionen des einen Sensorstreifen bedienenden Fingers der Länge nach auf einem Sensorstreifen mit einem zugeordneten sichtbaren Zeichenvorrat auf einem Display in einer vergrößerten Form interaktiv wiedergegeben werden kann, ist bisher nicht bekannt. Eine Anwendung des Sensorstreifens in einer kompletten Tastatur zur Zeicheneingabe, wobei diese durch Berührung des Tastaturstreifens mit dem Finger erfolgt und die Berührung des Sensorstreifens durch eine grafische Cursoranzeige bestätigt wird, ist bisher unterblieben, obgleich der Sensorstreifen ein bekanntes technisches Mittel darstellt.

Die Erfindung bezweckt, für kleine datenverarbeitende elektronische Geräte Eingabemittel für Zeichen, die sowohl kleinräumig sind, als auch einfach, schnell und sicher bedienbar sind und kostengünstig herstellbar sind, zu schaffen.

Der Erfindung liegt die Aufgabe zugrunde, eine Tastatur für datenverarbeitende elektronische Geräte, die aus einem fingerbedienbaren Sensorstreifen besteht, und ein Verfahren zur Benutzung eines Sensorstreifens zur Zeicheneingabe zu entwickeln.

Die Aufgabe wird durch die im kennzeichnenden Teil genannten Merkmale der unabhängigen Patentansprüche gelöst.

Die Erfindung soll nachfolgend an einem Ausführungsbeispiel näher erläutert werden. In der zugehörigen Zeichnung zeigen:
- Fig. 1.: Blockschaltbild der Komponenten,
- Fig. 2.: Beispiel einer Sensorstreifen-Tastatur direkt unter einem Display angeordnet,
- Fig. 3.: Beispiel einer Sensorstreifen-Tastatur am Lenkrad eines Kraftfahrzeugs
- Fig. 4.: Ein Flußdiagramm der Ablaufschritte zur Auswertung der Sensorinformation.

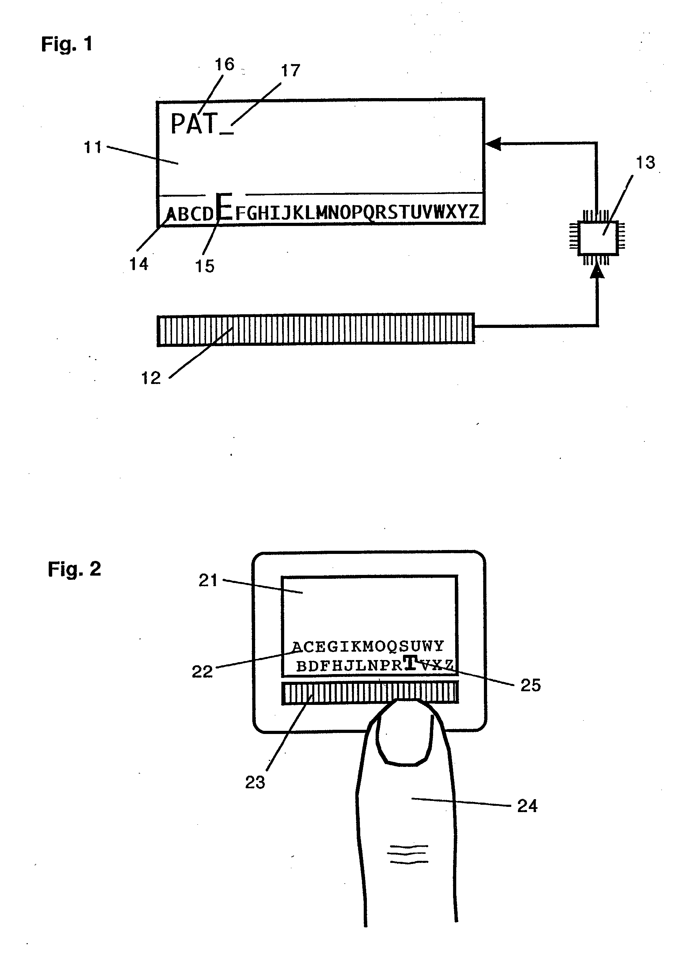

In Fig. 1 ist der Aufbau der erfindungsgemäß ausgebildeten Tastatur zur Texteingabe mittels Sensorstreifen zu sehen. Ein Display 11 und ein die Berührposition registrierender Sensorstreifen 12 sind mit einer Mikroprozessorsteuerung 13 so verbunden, daß der Sensorstreifen 12 parallel zu einem abgebildeten Zeichenvorrat 14 angebracht ist.

Eine Berührung des Streifens 12 mit dem Finger löst die Hervorhebung des Zeichens 15 an der entsprechenden Position des Zeichenvorrats 14 aus. Eine Bewegung des Fingers mit einer fortgesetzten Berührung des Streifens bewegt die Hervorhebung 15 entlang der Achse von 14. Wenn der Finger vom Streifen entfernt wird, wird das zuletzt hervorgehobene Zeichen als Eingabe in den vorhandenen Text 16 an der Schreibmarke 17 eingefügt.

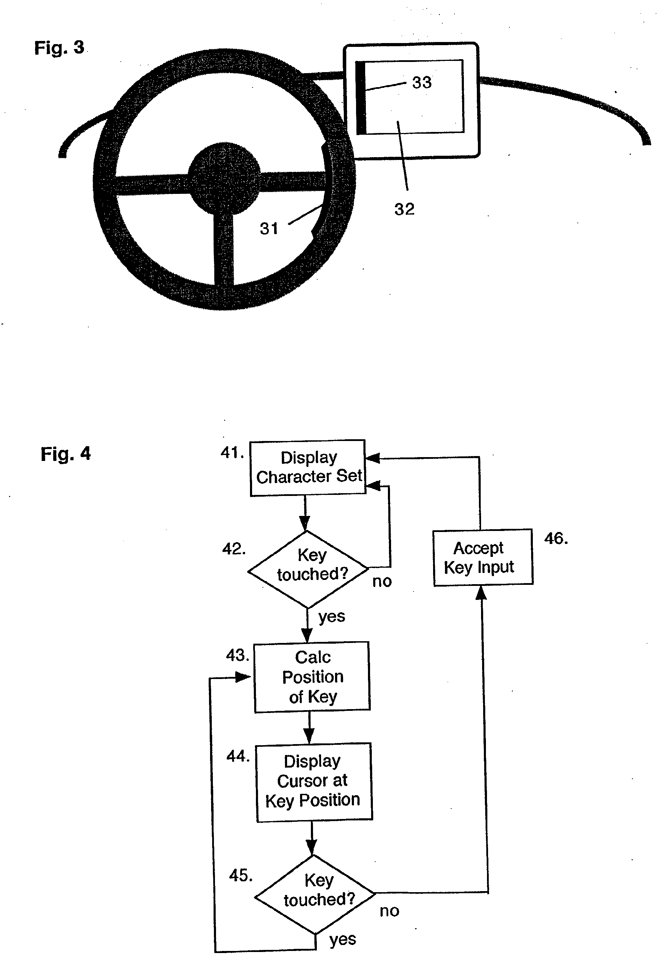

Fig. 2 zeigt ein Ausführungsbeispiel, wie es bei einer Digitalkamera oder einer Daten-Armbanduhr benutzt werden kann. Das Display 21 enthält den Zeichenvorrat 22 hier aus Platzgründen in zwei Zeilen, deren Einträge halb versetzt angezeigt werden. Das ermöglicht eine eindeutige Zuordnung von jeder Position auf dem Sensorstreifen 23 zu einem bestimmten Eintrag des Zeichenvorrats. Entsprechend der Position des Fingers 24 auf dem Streifen 23 erscheint das entsprechende Zeichen 25 hervorgehoben. In Fig. 3 ist ein Ausführungsbeispiel der Erfindung am Lenkrad eines Kraftfahrzeugs abgebildet. Der Sensorstreifen 31 ist über die hier nicht sichtbare Steuerung mit dem Display 32 verbunden.

Je nach Berührposition auf dem Streifen 31 wird ein bestimmtes Zeichen aus dem Zeichenvorrat 33 hervorgehoben. So lassen sich z.B. Texte und Zahlen in einen Bordcomputer oder in ein Navigationssystem eingeben, ohne die Hand vom Lenkrad zu nehmen. Das ist unter dem Aspekt der Verkehrssicherheit von Vorteil. Außer einer Hervorhebung auf dem Zeichenvorrat 33 wäre hier auch eine gesprochene Rückmeldung der Berührposition möglich.

Für eine einfache Bedienung der erfindungsgemäß ausgebildeten Tastatur ist es wesentlich, daß der Sensorstreifen in der gleichen Orientierung wie der Zeichenvorrat auf dem Display angebracht ist. Eine zusätzliche Kennzeichnung der Positionen des Sensorstreifens mit dem Zeichenvorrat ist möglich, aber unnötig. Wenn der Sensorstreifen keine Zeichen-Markierungen enthält, kann der Sensorstreifen je nach Software Anwendung als unterschiedliche Tastatur benutzt werden.

Die Eingabe eines Zeichens erfolgt in drei Schritten: 1. Berühren, 2. Überprüfen der betätigten Auswahl und ggf. Korrektur, 3. Loslassen und damit wirksame Eingabe. Ungeübte Benutzer lassen diese Schritte sorgfältig und bewußt aufeinander folgen und werden dabei durch die interaktive Darstellung unterstützt.

Mit zunehmender Übung stellt sich das psychologische Phänomen des "Ortsgedächtnis" (Muscle Memory) ein, das eine immer raschere Bedienung ermöglicht. Nach längerem Gebrauch wird ein Großteil der Bedienpersonen in der Lage sein, das gewünschte Zeichen direkt ohne Überprüfung am Bildschirm am Sensorstreifen zu treffen. Um diesen Tastsinn der Bedienperson zu unterstützen, können an markanten Positionen des Sensorstreifens fühlbare kleine Erhebungen oder Mulden angebracht sein (z.B. Auskerbungen im Abstand von jeweils fünf Zeichen).

In Bild 4 sind die Ablaufschritte zur Auswertung der Sensorinformation aufgeführt. Das Verfahren beginnt mit Schritt 41 in dem Moment, wo die Software eine Zeicheneingabe vorsieht. Der angebotene Zeichenvorrat wird dargestellt und die Steuerung ist bereit für Eingaben. Sobald in Schritt 42 eine Berührung der Sensorstreifen-Tastatur festgestellt wird, berechnet die Software in Schritt 43 aus der Berührposition auf dem Streifen das zugeordnete Zeichen aus dem Vorrat. In Schritt 44 wird dieses Zeichen grafisch hervorgehoben. Solange der Streifen noch gehalten wird (Schritt 45), werden die Schritte 43 bis 45 wiederholt und das jeweils aktuelle Zeichen erscheint hervorgehoben. Nach dem Loslassen wird die Eingabe akzeptiert (Schritt 46) und das System ist bereit für das nächste Zeichen.

Als Technik für die verwendeten Sensorstreifen sind sogenannte FSR (Force Sensing Resistors) in der Form von Linearpotentiometern geeignet, es können aber auch kapazitive Sensoren oder Folienschalter verwendet werden. Entscheidend ist, daß der Sensor eine Finger-Berührung des Streifens mit geringer Kraft (weniger als 30 Gramm) zuverlässig feststellt und die Position auf der Achse mit ausreichender Genauigkeit (mind. ca. 25 Positionen) schnell genug (mind. lOx pro Sekunde) an die Steuerung meldet.

Im Vergleich zu Steuerungen mit zwei Tasten zur Auswahl aus einer Liste bietet die Erfindung eine um Größenordnungen (Faktor 5 oder mehr) schnellere Zeicheneingabe. Auch im Vergleich zum JogDial ist die Eingabe wesentlich schneller, weil im Gegensatz zum JogDial der direkte Zugriff auf bestimmte Positionen möglich ist.

Der Platzbedarf eines Sensorstreifens ist gleich oder geringer als der einiger Tasten oder eines JogDials. Die Erfindung ist auch einsetzbar bei besonders kleinen Displays (Armbanduhr, Digitalkamera) oder vom Eingabemedlum entfernten Displays (Auto, TV-Fernbedienung), wo Touchscreens nicht verwendet werden können. Im Unterschied zur Spracherkennung ist die Eingabe mit der Erfindung zuverlässig und kontrollierbar.

Damit ermöglicht die Erfindung Anwendungen, die bisher nicht realisierbar waren, etwa die Eingabe von Namen für Tonaufzeichnungen eines digitalen Diktiergeräts oder die zügige Dateneingabe auf einer Armbanduhr mit Speicher.

Die Bedienung dieser Sensorstreifen-Tastatur ist sowohl einfacher als auch deutlich schneller als bei anderen Lösungen nach dem Stand der Technik. So bietet die Erfindung die derzeit kleinste und leichteste Tastatur zur direkten Zeicheneingabe. Die Sensorstreifen-Tastatur ermöglicht eine besonders kleine Bauweise und bietet damit erstmals kompakten elektronischen Geräten wie z.B. Digitalkameras, Armbanduhren und Fernbedienungen eine integrierte Tastatur zur Zeicheneingabe in akzeptabler Geschwindigkeit.

Solange der Streifen berührt wird, läßt sich die Position des Fingers und damit der Hervorhebung verändern. Erst wenn der Streifen losgelassen wird, ist die gewählte Tasteneingabe wirksam und das Zeichen wird übernommen. Hierdurch ist eine einfache und sichere Bedienung möglich.

## Patentansprüche

1. Tastatur zur Zeicheneingabe bei elektronischen Geräten, ***dadurch gekennzeichnet,* daß** ein berührempfindlicher Sensorstreifen in Verbindung mit einem Display als komplette Tastatur vorgesehen ist, wobei für die Position der Berührung des Sensorstreifens eine grafische Bestätigung auf dem Display vorgesehen ist.

2. Tastatur zur Zeicheneingabe nach Anspruch 1, ***dadurch gekennzeichnet,* daß** der Sensorstreifen entweder aus einem sogenannter FSR (Force Sensing Resistor) in Form eines Linearpotentiometers, aus einem kapazitiven Sensor oder aus einer Vielzahl von Folienschaltern besteht.

3. Tastatur zur Zeicheneingabe nach Anspruch 1 und 2, ***dadurch gekennzeichnet,* daß** die Folienschalter räumlich in Reihe und elektrisch als Matrix in für Tastaturen üblichen Abtastungen angeordnet sind.

4. Tastatur zur Zeicheneingabe nach Anspruch 1 bis 3, ***dadurch gekennzeichnet,* daß** der Sensorstreifen parallel zu einem auf einem Display abgebildeten Zeichenvorrat angebracht st.

5. Tastatur zur Zeicheneingabe nach Anspruch 1 bis 4, ***dadurch gekennzeichnet,* daß** der Sensorstreifen eine Länge von ca. 2 bis 15 cm und eine Breite ca. 2 bis 8 mm aufweist.

6. Tastatur zur Zeicheneingabe nach Anspruch 1 bis 5, ***dadurch gekennzeichnet,* daß** am Sensorstreifen in regel-mäßigen Abständen, die bestimmten Positionen des Zeichenvorrats entsprechen, fühlbare Markierungen ange-bracht sind.

7. Tastatur zur Zeicheneingabe nach Anspruch 1 bis 6, ***dadurch gekennzeichnet,* daß** der Sensorstreifen mit den Buchstaben "A" bis "Z" beschriftet ist.

8. Tastatur zur Zeicheneingabe nach Anspruch 1 bis 7, ***dadurch gekennzeichnet,* daß** zusätzlich zur Anzeige des hervorgehobenen Zeichens auf dem Display eine akustische Sprachausgabe vorgesehen ist.

9. Verfahren zur Benutzung eines Sensorstreifens zur Zeicheneingabe als Tastatur nach Anspruch 1 bis 8, ***dadurch gekennzeichnet,* daß** eine Berührung des Sensor-streifens mit einem Finger zu einer Hervorhebung eines der Position des Fingers entsprechenden Zeichens auf dem Display führt, worauf die Berührposition bis zur genauen Zeichenauswahl auf dem Sensorstreifen noch bewegt werden kann, nach Erreichen der genauen Zeichenposition der Sensorstreifen losgelassen wird und dadurch das zuletzt hervorgehobene Zeichen als Eingabe übermittelt wird.

10. Verfahren zur Benutzung eines Sensorstreifens zur Zeicheneingabe als Tastatur nach Anspruch 8, ***dadurch gekennzeichnet,* daß** nach Feststellung der Berührung des Sensorstreifens aus der ermittelten Berührungsposition auf dem Sensorstreifen das dieser Position zugeordnete eingegebene Zeichen errechnet und sodann graphisch dargestellt wird, solange die Berührung des Sensorstreifens fortbesteht, das aktuelle, der Berührungsposition entsprechende Zeichen dargestellt und erst nach Aufgabe der Betätigung die Zeicheneingabe akzeptiert und dann eine Freischaltung für die Eingabe eines weiteren Zeichens vorgenommen wird.
